# EUROPEAN PATENT SPECIFICATION

(11) **EP 0 382 406 B1**
(45) Date of publication and mention of the grant of the patent: **17.01.1996**
(21) Application number: 90301043.7
(22) Date of filing: 01.02.1990
(51) Int. Cl.: F16K 31/06

(54) **Modulating positive shut-off mechanism**
Modulierende Absperrvorrichtung
Dispositif d'arrêt modulant

(30) Priority: 06.02.1989 US 307676
(43) Date of publication of application: 16.08.1990
(73) Proprietor: MKS INSTRUMENTS, INC., Andover Massachusetts 01810 (US)
(72) Inventor: Ewing, James H., Lexington, Massachusetts 02173 (US)
(74) Representative: Hitchcock, Esmond Antony

(56) References cited:
- DE-B- 1 750 470
- DE-B- 1 906 625
- FR-A- 2 139 890

## Description

The present invention relates to controlling the flow of fluids such as gases.

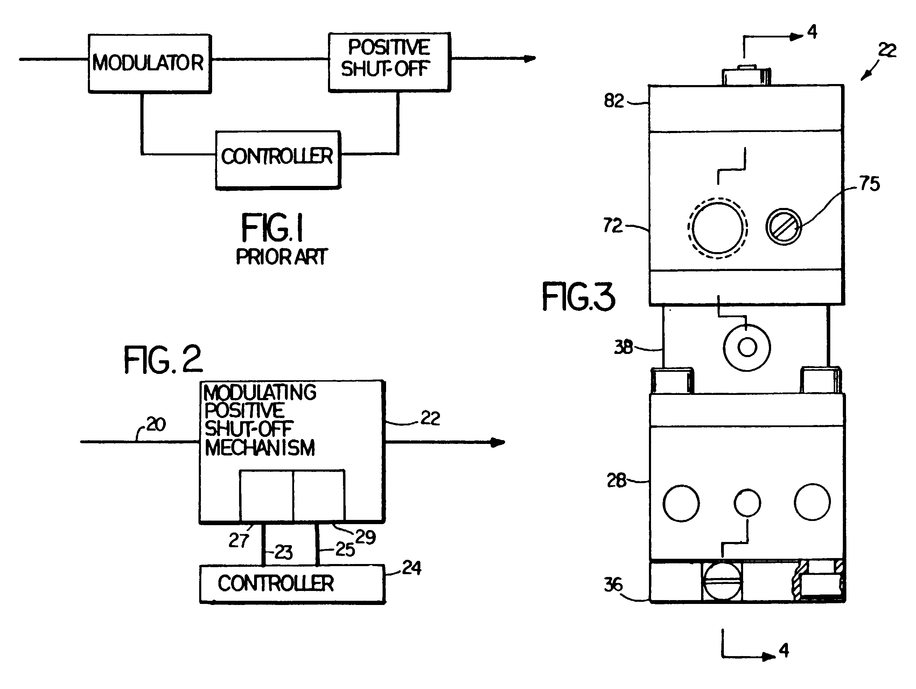

It is known to control flow in a fluid path with a flow control system having a positive shut-off valve located downstream of a modulator; a controller controls both the valve and the modulator to provide the fluid path with both modulation and positive shut-off control. Fig. 1 shows such a system.

It is also known to provide a flow system which produces a gas flow having sharp leading and trailing edges by providing extra valves, tubes and pumps to the flow control system described above.

An example of a modulator as described above is a proportional control valve available from MKS Instruments, Inc. (Andover, Massachusetts U.S.A.) under the trade designation "248 Valve". In this valve, an armature assembly is suspended and centered in the valve body by a top spring and a bottom spring. The bottom spring is dual purpose and provides both centering and closing force; the top spring only provides centering force. Located in such a fashion, the armature may be lifted in a very precise way by a solenoid coil, thereby controlling flow. In operation of this valve, gas enters the valve and flows. into the valve seat chamber. As this armature is lifted by the solenoid, flow commences through an orifice assembly, through a sidedrilled passage and out of the valve. The valve seat contains a elastomeric plug which bears on the orifice; however, due to the low seating pressure and the permeation rate of gases through the elastomeric material, a positive shut-off is not possible.

Reference is also directed to DE-A-1 906 625 which discloses a closure mechanism for control valves which provides short closing times. The present invention is directed at flow control apparatus broadly of this type, and particularly but not exclusively for process gas, comprising means defining a process flow path having an inlet and an outlet; a valve for controlling the flow of process fluid along the path between the inlet and the outlet and operable between open and closed positions; a first actuating mechanism for operating the valve to control flow of process fluid along said path; and a second actuating mechanism operable in an "on" mode to positively shut off the valve independently of the first actuating mechanism so that process fluid flow is prevented, and in an "off" mode in which first actuating mechanism is operable to control the rate of flow of process fluid independently of the second actuating mechanism. According to the invention, the second actuating mechanism includes a piston coupled to the valve; a spring applying a spring force to the piston, and means for applying pressure to the piston against the force of the spring when the mechanism operates in its "off" mode, the mechanism being adapted in its "on" mode to remove said pressure and allow the spring to positively shut off the valve.

Apparatus of the invention may be configured to stop process gas flow to the extent that it may not be detected by a Helium gas leak detector having a sensitivity of at least 1 x 10⁻⁹ sccm He ("standard cubic centimeters per minute of Helium") when the force is provided.

The valve mechanism typically comprises an armature assembly and a solenoid configured to cause the armature to move. Thus, the process fluid path may include a seat with which a portion of the armature assembly movably mates. Preferably, the positive shut-off mechanism causes the portion of the armature assembly to undergo elastic deformation when the force is provided to the valve mechanism.

The process fluid path is normally defined by a metal construction, and portions of the path of fluid flow contacted by the process fluid path all metal. The apparatus may include an oil path, a first portion of which is contiguous to a first process fluid portion of the process fluid path, the oil path providing a preload force via a diaphragm to a valve process fluid portion, the valve mechanism being positioned at the valve process fluid portion of the path, and the valve mechanism being capable of overcoming the preload force. Preferably the first oil portion is separated from the first process fluid portion by a linear spring. Further, the apparatus may include a second oil portion and a second process fluid portion, the second oil portion being contiguous to the second process fluid portion wherein the second process fluid portion is separated from the second oil portion by a diaphragm and the linear spring includes a bellows.

An embodiment of the invention will now be described by way of example and with reference to the accompanying drawings wherein:
Fig. 1, labelled prior art, is a diagrammatic representation of a known flow control system;
Fig. 2 is a diagrammatic representation of a flow control system according to the invention;
Fig. 3 is a side view of a modulating positive shut-off mechanism of the Fig. 2 system;
Fig. 4 is a view along the line 4-4 of the Fig. 3 modulating positive shut-off mechanism;
Fig. 5 is a view along the line 5-5 of the Fig. 4 modulating positive shut-off mechanism;
Fig. 6 is a view along the line 6-6 of the Fig. 4 modulating positive shut-off mechanism; and
Fig. 7 is a view along the line 7-7 of the Fig. 4 modulating positive shut-off mechanism.

Referring to Fig. 2, fluid, e.g., gas, in fluid path 20 is controlled by modulating positive shut-off mechanism 22. Mechanism 22 is connected to flow controller 24 via electric signal line 23, which is connected to valve mechanism 27, and pneumatic signal line 25, which is connected to positive shut-off mechanism 29.

Referring to Figs. 2 through 7, fluid is input to modulating positive shut-off mechanism 22 via inlet channel 26, defined by lower body 28, and output from mechanism 22 via outlet channel 30, defined by lower body 28. Fluid flows from inlet channel 26 to bellows chamber 32 and fluid flows into outlet channel 30 from diaphragm chamber 34, which are also defined by base 36 and coil housing assembly 38, respectively.

Bellows 40 divides bellows chamber 32 into fluid side bellows chamber 42 and oil side bellows chamber 44. Diaphragm 46 divides diaphragm chamber 34 into fluid side diaphragm chamber 48 and oil side diaphragm chamber 50. Lower body 28 also defines fluid channel 52 which connects fluid side bellows chamber 32 to fluid side diaphragm chamber 48. Lower body oil channel 54 connects base oil channel 58, defined by base 36, to oil side diaphragm chamber 50 via aperture 55 in coil housing 56. Oil side diaphragm chamber 50 is also connected to coil housing oil channel 57. Base oil channel 58 is also connected to oil side bellows chamber 54 and defines threads into which threaded displacement piston 59 is threaded.

Coil housing assembly 38, which includes coil housing 56, defines armature channel 60 in which sleeve 62, armature guide 64 and armature weldment 66 of armature assembly 68 fit. Coil housing assembly 38 also includes transformer coil 69, e.g., a frictionless solenoid, and is connected to electric signal line 23 which extends through aperture 67. Armature assembly 68 also includes diaphragm 46 having ball retainer 70, which is passed through diaphragm 46 and attached to armature weldment 66, and ball 71, which is held in place by ball retainer 70. In a closed position, ball 71 mates with the inlet of outlet channel 30, which serves as a seat for ball 71.

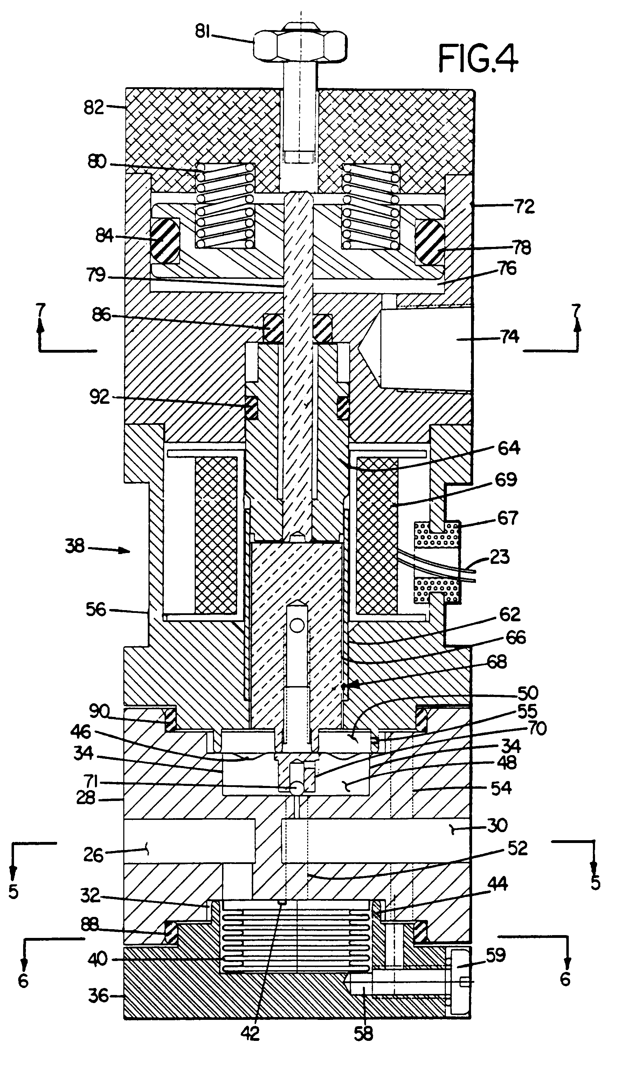

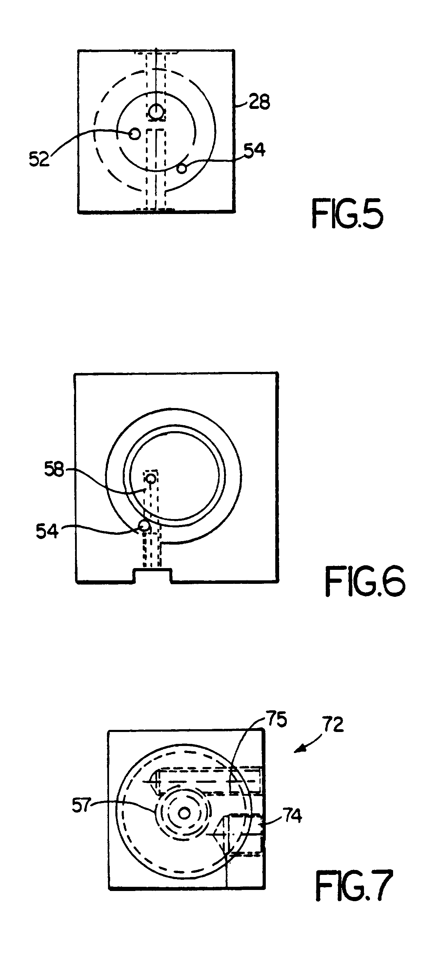

Referring to Figs. 4 and 7, coil housing assembly 38 is contiguous with upper alignment block 72 which includes air channel 74 which connects air hose 25 to air chamber 76. Air chamber 76 is defined by upper alignment block 72 and piston 78 which is slideably mounted within upper alignment block 72. Rod 79 is attached to piston 78 and extends down through armature guide 64 to be in close proximity to armature assembly 68. Four springs 80 (two of which are shown), each having a compressed strength of 7 pounds (3.2 kg), are compressedly located between piston 78 and cap 82. Upper alignment block 72 also defines upper oil channel 75 which is connected to coil housing oil channel 57. Threaded displacer 81 extends through cap 82 to contact rod 79.

O-rings 84, 86 seal air chamber 76 and coil housing oil channel 57. O-rings 88, 90, 92 seal oil within the oil portions of mechanism 22.

Mechanism 22 includes three paths, a process fluid path, a hydraulic (or oil) path and an air path. The process fluid path includes inlet channel 26, fluid side bellows chamber 42, fluid channel 52, fluid side diaphragm chamber 48 and outlet channel 30. All of the junctions in the process fluid path are metal to metal seals. The hydraulic path, which is vacuum filled with oil, e.g., DC 704 oil, includes oil side bellows chamber 44, base oil channel 58, lower body oil channel 54, aperture 55, oil side diaphragm chamber 50, coil housing oil channel 57 and upper oil channel 75. The air path includes air channel 74 and air chamber 76.

Referring to Fig. 2, modulating positive shut-off mechanism 22 controls fluid in fluid path 20 by either modulating fluid flow in path 20 or by completely stopping fluid flow in path 20, i.e., stopping flow to the maximum sensitivity of a commercial Helium leak detector (1 x 10⁻⁹ sccm He), by providing positive shut-off with mechanism 22.

More specifically, referring to Figs. 3 through 5, process gas enters the fluid path of mechanism 22, entering through inlet channel 26 to fluid side bellows chamber 42, and then flowing upwards through fluid channel 52 to fluid side diaphragm chamber 48. When ball 71 is lifted by actuating transformer coil 69 via an electric signal from controller 24, flow commences out outlet channel 52 and thus through the fluid portion. Coil housing assembly 38 functions as valve mechanism 27 which controls and modulates fluid flow through the fluid path.

The hydraulic path provides a pressure transfer feature. Oil is essentially incompressible, so gas pressure which appears in fluid side bellows chamber 42 is carried up to oil side diaphragm chamber 50, thus neutralizing forces across diaphragm 46. Threaded displacer piston 59 is connected to the hydraulic path and controls the preload of bellows 40.

Bellows 40 functions as a linear spring. The force of ball 71 in its seat is adjusted by preloading bellows 40 with the piston displacer. This preload is a few ounces (or grams), which is of insufficient force to cause positive shut-off and which may be overcome by coil 69. Thus, coil 69 may lift ball 71 to control and modulate flow over the preload pressure. During modulation, air pressure is maintained within the air path so that rod 79, which is attached to piston 78, does not contact armature assembly 68.

Positive shut-off to 1 x 10⁻⁹ sccm He is provided by removing air from the air path thereby allowing springs 80 to force piston 78 and rod 79 downward. Rod 79 contacts the top of armature assembly 68 and forces it downward. The force of springs 80 is large enough to overcome the control of transformer coil 69, as well as the preload of the mechanism. As armature assembly 68 is forced downward, ball 71 contacts its seat and elastic deformation takes place, thus forming a positive seal.

Applying air pressure (about 50 to 75 psi (3.4 to 5.1 atm)) to the air path causes piston 78 and rod 79 to retract, thereby allowing armature assembly 68 to resume control. Threaded displacer 81 controls how far rod 79 and piston 78 retract. The combination of springs 80, piston 78, rod 79 and the air zone provides positive shut-off mechanism 29.

Thus, the present invention advantageously provides a fluid flow control mechanism in which the process fluid sees only metal, control and positive shut-off occur in the same mechanism and at the same point, the mechanism operates at the same speed as a frictionless solenoid, and the mechanism produces sharp fluid flow profiles (thus obviating the need for purging and back-flushing the system).

## Claims

1. Apparatus for controlling the flow of a process fluid, comprising means defining a process flow path (20) having an inlet (26) and an outlet (30); a valve (27) for controlling the flow of process fluid along the path between the inlet and the outlet and operable between open and closed positions; a first actuating mechanism (22) for operating the valve to control flow of process fluid along said path; and a second actuating mechanism (29) operable in an "on" mode to positively shut off the valve independently of the first actuating mechanism so that process fluid flow is prevented, and in an "off" mode in which first actuating mechanism (22) is operable to control the rate of flow of process fluid independently of the second actuating mechanism,
CHARACTERISED IN THAT the second actuating mechanism (29) includes a piston (78) coupled to the valve; a spring (80) applying a spring force to the piston, and means for applying pressure to the piston (78) against the force of the spring (80) when the mechanism operates in its "off" mode, the mechanism (29) being adapted in its "on" mode to remove said pressure and allow the spring (80) to positively shut off the valve (27).

2. Apparatus according to Claim 1, wherein the valve (27) comprises two sealing elements (71) positioned between the inlet (26) and the outlet (30), the first actuating mechanism being operable to move one element (71) with respect to the other to control the rate of flow along said path when the second actuating mechanism (29) is in its "off" mode, and wherein the second actuating mechanism (29) is operable to force the sealing elements together to shut off fluid flow in its "on" mode.

3. Apparatus according to Claim 2 wherein the sealing elements comprise a material selected from nonelastomeric materials; stainless steel; and other metallic materials.

4. Apparatus according to any preceding Claim wherein the first actuating mechanism (22) is operable to close the valve (27) with a force substantially less than the closing force of the second actuating mechanism (29) in its "on" mode.

5. Apparatus according to any preceding Claim wherein the first actuating mechanism (22) includes an electromagnetic system (64, 69).

6. Apparatus according to Claim 5 wherein the electromagnetical system includes a solenoid coil (69) electromagnetically coupled to the valve (27).

7. Apparatus according to Claim 6 wherein the electromagnetic system includes a magnetically conductive member (64), the valve (27) comprising a pair of sealing elements (71) one of which is coupled to the magnetically conductive member (64) whereby current conducted in the coil (69) generates flux in the member (64) to move the member and operate the valve (27).

8. Apparatus according to Claim 7 wherein the second actuating mechanism (29) is adapted to cause said one sealing element (71) to undergo elastic deformation when the valve (27) is closed.

9. Apparatus according to any preceding Claim including means (40, 46, 80) for providing a preload force to the valve (27).

10. Apparatus according to Claim 9 wherein said means define an oil path (44, 50, 54, 55, 57, 58, 75), a first portion (44) of which oil path is contiguous to a portion (42) of the process fluid path so that fluid in the process path provides a preload force to the valve (27).

11. Apparatus according to Claim 10 wherein said means further includes a spring member (40).

12. Apparatus in according to Claim 11 wherein the spring member (40) is a bellows.

13. Apparatus according to any preceding Claim wherein the second actuating mechanism (29) includes a pneumatic system (76, 78, 79) operable in the "on" mode to apply a high resilient closing force to the valve (27).

14. Apparatus according to any preceding Claim including a controller (24) for controlling the first and second actuating mechanisms.

15. Apparatus according to any preceding Claim wherein the flow path is for a process gas.

## Patentansprüche

1. Vorrichtung zum Regeln des Flusses einer Prozeß-Flüssigkeit, umfassend Mittel, die einen Prozeß-Durch-flußweg (20) definieren, der einen Einlaß (26) und einen Auslaß (30) aufweist; ein Ventil (27) zum Regeln des Prozeß-Flüssigkeit-Flusses entlang des Weges zwischen dem Einlaß und dem Auslaß und betriebsfähig zwischen offenen und geschlossenen Stellungen; ein erstes Betätigungsorgan (22) zum Bedienen des Ventils, um den Prozeß-Flüssigkeits-Fluß entlang des Weges zu regeln; und ein zweites Betätigungsorgan (29) betriebsfähig in einer "ein"-Betriebsart, um das Ventil unabhängig vom ersten Betätigungsorgan absolut abzustellen, so daß ein Prozeß-Flüssigkeits-Fluß unterbunden wird, und in einer "aus"-Betriebsart, in der das erste Betätigungsorgan (22) betriebsfähig ist, die Geschwindigkeit des Prozeß-Flüssigkeit-Flusses unabhängig vom zweiten Betätigungsorganes zu regeln,
DADURCH GEKENNZEICHNET, daß das zweite Betätigungsorgan (29) einen Kolben (78) einschließt, der an das Ventil gekoppelt ist; eine Feder (80), die eine Federkraft auf den Kolben ausübt, und Mitteln, um Druck auf den Kolben (78) gegen die Kraft der Feder (80) auszuüben, wenn das Organ in seiner "aus"-Betriebsart arbeitet, und daß das Organ (29) in seiner "ein"-Betriebsart daran angepaßt ist, den Druck wegzunehmen und es der Feder (80) zu erlauben, das Ventil (27) absolut abzustellen.

2. Vorrichtung nach Anspruch 1, dadurch gekennzeichnet, daß das Ventil (27) zwei Abdichtungs-Elemente (71) umfasst, die zwischen dem Einlaß (26) und dem Auslaß (30) angeordnet sind, das erste Betätigungsorgan betriebsfähig ist, um ein Element (71) in Bezug auf das andere zu bewegen, um die Fließgeschwindigkeit entlang des Weges zu regeln, wenn das zweite Betätigungsorgan (29) in seiner "aus"-Betriebsart ist, und daß das zweite Betätigungsorgan (29) betriebsfähig ist, die Abdichtungs-Elemente zusammenzudrücken , um den Flüssigkeitsfluß in seiner "ein"-Betriebsart abzustellen.

3. Vorrichtung nach Anspruch 2, dadurch gekennzeichnet, daß die Abdichtungs-Elemente ein Material umfassen, das aus nichtelastomeren Materialien, rostfreiem Stahl, und anderen metallischen Materialien ausgewählt wird.

4. Vorrichtung nach jedem vorhergehenden Anspruch, dadurch gekennzeichnet, daß das erste Betätigungsorgan (22) betriebsfähig ist, das Ventil (27) mit einer wesentlich geringeren Kraft zu schließen, als die Schließkraft des zweiten Betätigungsorgans (29) in seiner "aus"-Betriebsart.

5. Vorrichtung nach jedem vorhergehenden Anspruch, dadurch gekennzeichnet, daß das erste Betätigungsorgan (22) ein elektromagnetisches System (64, 69) einschließt.

6. Vorrichtung nach Anspruch 5, dadurch gekennzeichnet, daß das elektromagnetische System eine Zylinderspule (69) einschließt, die elektromagnetisch an das Ventil (27) gekoppelt ist.

7. Vorrichtung nach Anspruch 6, dadurch gekennzeichnet, daß das elektromagnetische System ein magnetisch leitendes Glied (64) einschließt, das Ventil (27) ein Paar Dichtungselemente (71) umfaßt, von denen eines mit dem magnetisch leitenden Glied (64) gekoppelt ist, wodurch Strom, den die Spule (69) führt, Fluß in dem Glied (64) erzeugt, um das Glied zu bewegen und das Ventil (27) zu betätigen.

8. Vorrichtung nach Anspruch 7, dadurch gekennzeichnet, daß das zweite Betätigungsorgan (29) so angepasst ist, daß es bewirkt, daß das eine Abdichtungs-Element (71) eine elastische Deformation erfährt, wenn die Ventil (27) geschlossen ist.

9. Vorrichtung nach jedem vorhergehenden Anspruch, dadurch gekennzeichnet, daß sie Mittel (40, 46, 80) einschließt, um dem Ventil (27) eine Vorspannkraft bereitzustellen.

10. Vorrichtung nach Anspruch 9, dadurch gekennzeichnet, daß diese Mittel einen Öl-Weg (44, 50, 54, 55, 57, 58, 75) definieren, einen ersten Abschnitt (44), auf dem der öl-Weg an einen Abschnitt (42) des Prozeß-Flüssigkeits-Weges angrenzt, so daß Flüssigkeit in dem Prozeß-Weg dem Ventil (27) eine Vorspannkraft bereitstellt.

11. Vorrichtung nach Anspruch 10, dadurch gekennzeichnet, daß diese Mittel ferner ein Feder-Glied (40) einschließen.

12. Vorrichtung in nach Anspruch 11, dadurch gekennzeichnet, daß das Feder-Glied (40) ein Balgen ist.

13. Vorrichtung nach jedem vorhergehenden Anspruch, dadurch gekennzeichnet, daß das zweite Betätigungsorgan (29) ein Druckluft-System (76, 78, 79) einschließt, das in der "aus"-Betriebsart betriebsfähig ist, um eine hochfedernde Schließkraft auf das Ventil (27) anzuwenden.

14. Vorrichtung nach jedem vorhergehenden Anspruch, dadurch gekennzeichnet, daß sie eine Regeleinrichtung (24) einschließt, um das erste und zweite Betätigungsorgan zu steuern.

15. Vorrichtung nach jedem vorhergehenden Anspruch, dadurch gekennzeichnet, daß der Fluß-Weg für ein Prozeß-Gas ist.

## Revendications

1. Appareil pour le contrôle de l'écoulement d'un fluide de traitement, comprenant des moyens de traitement définissant une voie d'écoulement (20) ayant une entrée (26) et une sortie (30); une soupape (27) pour contrôler l'écoulement du fluide de traitement le long de la voie entre l'entrée et la sortie et pouvant être utilisé entre les positions d'ouverture et de fermeture; un premier mécanisme de commande (22) pour actionner la soupape pour contrôler l'écoulement du fluide de traitement le long de ladite voie; et un second mécanisme de contrôle (29) pouvant être utilisé dans un mode "marche" pour fermer totalement la soupape indépendamment du premier mécanisme de commande de telle manière que l'écoulement du fluide de traitement est empêché, et dans son mode "arrêt" dans lequel le premier mécanisme de commande (22) peut être utilisé pour contrôler le débit du fluide de traitement indépendamment du second mécanisme de commande, caractérisé en ce que, le second mécanisme de commande (22) comprend un piston (78) couplé avec une soupape; un ressort (80) appliquant une force de ressort au piston, et des moyens pour appliquer une pression au piston (78) contre la force du ressort (80) quand le mécanisme fonctionne dans son mode "arrêt", le mécanisme (29) étant adapté dans son mode "marche" pour supprimer ladite pression et permettre au ressort (80) de fermer totalement la soupape (27).

2. Appareil selon la revendication 1,caractérisé en ce que la soupape (27) comprend deux éléments de joint (71) positionnés entre l'entrée (26) et la sortie (30), le premier mécanisme de commande pouvant être utilisé pour mouvoir un des éléments (71) en respectant l'autre afin de contrôler le débit le long de ladite voie quand le second mécanisme de contrôle (29) est dans son mode "arrêt", ce second mécanisme de commande (29) pouvant être utilisé pour presser les éléments de joint l'un contre l'autre afin d'arrêter l'écoulement de fluide dans son mode "marche".

3. Appareil selon la revendication 2, caractérisé en ce que les éléments de joint comprennent un matériau sélectionné parmi les non élastomères; l'acier inoxydable; et d'autres matériaux métalliques.

4. Appareil selon l'une quelconque des revendications 1, 2, et 3, caractérisé en ce que le premier mécanisme de commande (22) peut être utilisé pour fermer la soupape (27) avec un force sensiblement inférieure à la force de fermeture du second mécanisme de commande (29) dans son mode "marche".

5. Appareil selon l'une quelconque des revendications 1, 2, 3, et 4 caractérisé en ce que le premier mécanisme de commande (22) comprend un système électromagnétique (64,69).

6. Appareil selon la revendication 5, caractérisé en ce que le système électromagnétique comprend un solénoïde (69) couplé électromagnétiquement avec la soupape (27).

7. Appareil selon la revendication 6, caractérisé en ce que le système électromagnétique comprend un membre conducteur magnétique (64), une soupape (27) comprenant une paire d'éléments de joint (71) dont l'un est couplé au conducteur magnétique (64) par lequel le courant passant dans le solénoïde (69) génère un flux dans le conducteur (64) pour le déplacer et actionner la soupape (27).

8. Appareil selon la revendication 7, caractérisé en ce que le second mécanisme de contrôle (29) est adapté pour faire subir audit élément de joint (71) une déformation élastique quand la soupape (27) est fermée.

9. Appareil selon l'une quelconque des revendications 1 à 8, caractérisé en ce qu'il comprend les moyens (40, 46, 80) pour fournir une force de précharge à la soupape (27).

10. Appareil selon la revendication 9, caractérisé en ce que lesdits moyens définissent une voie à huile (44, 50, 54, 55, 57, 58, 75), une première partie (44) dont le canal à huile est contigu à une partie (42) de la voie de fluide de traitement de telle manière que le fluide dans la voie de traitement fournisse une force de précharge à la soupape (27).

11. Appareil selon la revendication 10, caractérisé en ce que les moyens comprennent de plus un ressort (40).

12. Appareil selon la revendication 11, caractérisé en ce que le ressort (40) est un soufflet.

13. Appareil selon l'une quelconque des revendications 1 à 12, caractérisé en ce que le second mécanisme de commande (29) comprend un système pneumatique (76, 78, 79) pouvant être utilisé dans le mode "marche" pour appliquer une grande force de fermeture élastique à la soupape (27).

14. Appareil selon l'une quelconque des revendications 1 à 13, caractérisé en ce qu'il comprend un mécanisme de contrôle (24) pour contrôler le premier et le second mécanismes de contrôle.

15. Appareil selon l'une quelconque des revendicationsl à 14, caractérisé en ce que la voie d'écoulement est destinée à un gaz de traitement.
